**Europäisches Patentamt**

**European Patent Office**

**Office européen des brevets**

(19)

(11) Publication number: **0 162 973**
**A1**

# EUROPEAN PATENT APPLICATION

(12)

(21) Application number: **84200787.4**

(22) Date of filing: **30.05.84**

(51) Int. Cl.⁴: **G 01 B 11/24**
**G 01 B 11/02**

(43) Date of publication of application:
**04.12.85 Bulletin 85/49**

(84) Designated Contracting States:
**AT BE CH DE FR GB IT LI LU NL SE**

(71) Applicant: **NEDERLANDSE CENTRALE ORGANISATIE VOOR TOEGEPAST-NATUURWETENSCHAPPELIJK ONDERZOEK**
**Juliana van Stolberglaan 148**
**NL-2595 CL The Hague(NL)**

(71) Applicant: **HANKAMP B.V.**
**Buurserstraat 198**
**NL-7544 RG Enschede(NL)**

(72) Inventor: **Visser, Huibert**
**Hazeveld 16**
**NL-2761 XJ Zevenhuizen(NL)**

(74) Representative: **van der Beek, George Frans et al,**
**Nederlandsch Octrooibureau Johan de Wittlaan 15 P.O.**
**Box 29720**
**NL-2502 LS 's-Gravenhage(NL)**

(54) **Distance measuring device.**

(57) A device for determining the distance from a point on the surface of an object to a fixed point. Which device consists of a light source (1), and – positioned behind each other in the path of the light beam emitted by the light source – means (17) to limit the section of this beam, a ray splitter (6) and a microscope objective (7) to focus the beam onto a point (8) on the surface of the object (14) to be measured. Furthermore, means (18) to asymmetrically limit the section of the reflected beam and a position sensitive light detector are arranged behind each other in the path of the beam subsequently reflected by the road surface (14) of the object and the ray splitter (6). The means to limit the beam emanating from the light source also realizes an asymmetric limitation of said beam. The illuminating system in above device is based on the diffuse reflection at the surface of the object to be measured.

./...

EP 0 162 973 A1

Fig-1

Distance measuring device.

The invention relates to a device to determine the distance from a point on the surface of an object to a fixed point, which device consists of a light source, and ‑ positioned behind each other in the path of the light beam emitted by the light source ‑ means to limit the section of a ray splitter and a microscope objective to focus the beam onto a point on the surface of the object to be measured, means to asymmetrically limit the section of the reflected beam and a position sensitive light detector being arranged behind each other in the path of the beam subsequently reflected by the surface of the object and the ray splitter.

Such a device is known from French patent application 2,229,042. The device of this French patent application consists of ‑ aranged behind each other ‑ a light source S, two positive lenses L1 and L2, two plates f1 and f2 having between them a narrow gap F which extends through the axis of the light beam from the light source S, a semi‑transparent mirror LS and a microscope objective O. Said microscope objective O froms an image of the gap F onto a point p on the surface of the object P to be measured. The light beam reflected by said object P passes again ‑ but in opposite direction now ‑ through the microscope objective O and subsequently is reflected by the semi‑transparent mirror LS and then is focussed into a point close to of a knife edge CF arranged at one side of the axis of said reflected beam. After passing this knife edge the reflected light beam impinges on a position sensitive light detector.

If the distance from the surface of the object P to the microscope objective O changes, or in other words if the object P moves in the direction of the axis of the light beam from the light source S, also the position of the point, in which the reflected beam is focussed, and the portion of this beam screened by the asymmetric limitater CF also changes. A movement of the object P in the direction of the axis of the (primary) light beam now results in a movement of the reflected light beam perpendicular to the axis thereof, which latter movement is detected by the position sensitive light detector.

This known device is disadavantageous herein that good measurement results can only be obtained if the light beam, through which the measurement is realised, impinges completely or almost completely perpendicular onto the surface. This is pointedly indicated in the above-mentioned French patent application and also appears from figures 8 and 9. In case the measuring ray has an incident direction, which deviates a few degrees only from the normal, measurement mistakes of some tens of percents already occur.

The invention aims to provide a device to determine the distance from a point on the surface of an object to a fixed point, whereby good measurement results are also obtained if the measuring ray is not perpendicularly incident on the surface of the object. More particularly this is of importance if the device is used to determine the form of toothed wheels because, when measuring the flanks of the teeth of such wheels, the direction of the measuring ray usually strongly deviates from that of the normal on the surface of the flank.

The aim of the invention is attained with a device of the type indicated in the preamble, which device according to the invention is characterized in that said means to limit the beam emanating from the light source also realizes an asymmetric limitation of said beam. This device uses an illuminating system essentially different from that of the above-mentioned French patent application namely through the diffuse reflection at the surface of the object to be measured.

The ray splitter in the device according to the invention may consist of a semi-transparent mirror which is inclined with respect to the axis of the light beam emitted by the light source. In a preferred embodiment of the device according to the invention the light from the light source is linearly polarized, i.e. that the light source per se emits polarized light or that the light source is provided with a polarizing filter. The ray splitter then consists of a polarizing part mirror which is inclined with respect to the axis of the light beam emitted by the light source, and moreover between this polarizing part mirror and the objective a

means rotating the polarization direction, for example a so-called 1/4 $\lambda$ plate, is arranged.

It is furthermore preferred that each of the means to asymmetrically limit the light beams is arranged at the location of an image of the pupil of the objective.

The invention will be explained in detail with the help of the drawing, in which :

Figure 1 shows an embodiment of the device according to the invention having a semi-transparent mirror;

Figure 2 shows another embodiment of the device according to the invention having a polarizing part mirror;

Figure 3 shows an embodiment of the device according to the invention having a semi-transparent mirror and an angular mirror to determine the position of the formed image;

Figure 4 shows an embodiment of the device according to the invention having a position sensitive detector; and

Figure 5 once more shows another embodiment of the device according to the invention having a toothed wheel to be measured.

In said figures the same components are referenced by the same reference numbers.

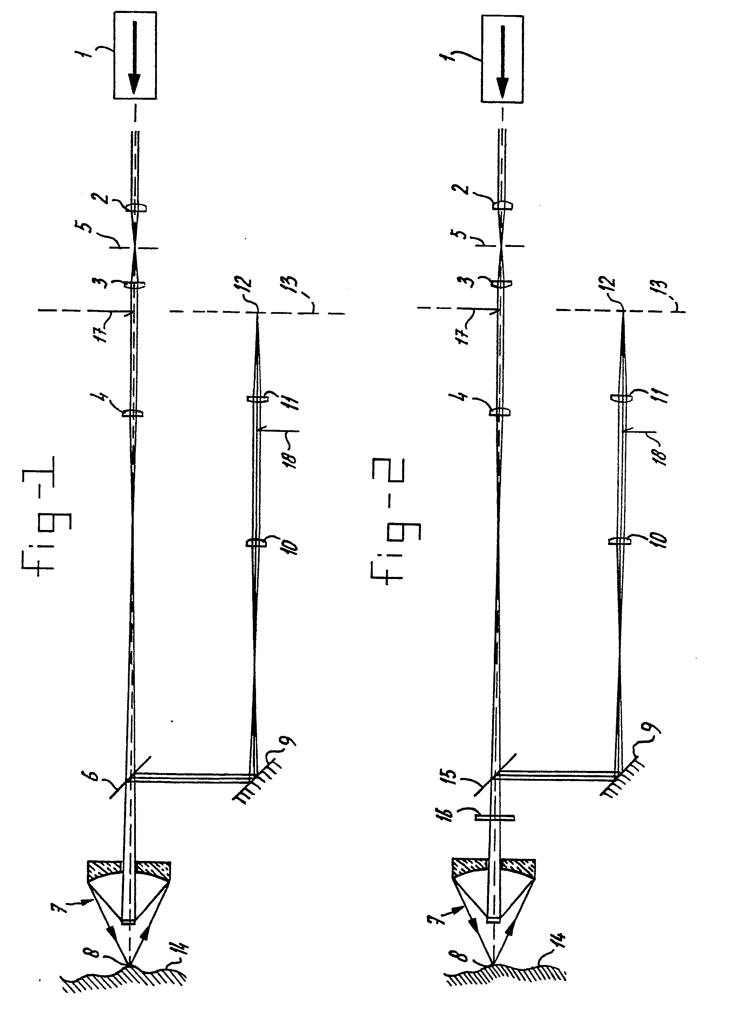

Turning to figure 1 a light source 1, for example a laser, is indicated. The beam emitted by this light source passes the lenses 2, 3 and 4, the gap 5 and the asymmetric limiter 17 and impinges on the semi-transparent mirror 6. A portion of the beam is reflected upwards by this mirror and is lost for the further measuring process. Another portion of the beam passes through the mirror and impinges on a microscope objective 7 which focusses the beam into a point 8. In order to raise the precision as much as possible, a laser having limited bending is used as a light source, i.e. a laser which, while having a determined beam diameter, provides high energy in the smallest possible space angle. The used objective 7 is a (substantially) bending limited optics having a small focal distance and a large numeric aperture. In order to obtain an acceptable free object distance, to this end a special type microscope objective is used, f.e. a 36x mirror microscope objective having a focal distance of 5,4 mm, a numeric aperture of 0,5 and a free object distance of 8 mm. The light of the light spot 8, which may have a diameter of some μm, is diffusedly reflected by the surface of the object to be measured. A portion of this diffusedly reflected light is received by the objective 7. The beam emanating from the objective 7 impinges on the semi-transparent mirror 6. A portion of said incident beam passes this mirror 6 and is lost for the further measurement, while another portion is reflected downwards and subsequently passes the lenses 10, 11 and the asymmetric limitater 8 and forms an image 12 on the detection plane 13. Said detection plane is an image of the focal plane of the microscope objective 7. If the surface 14 to be measured is moved in the direction of the measuring ray, i.e. in the drawing from left to right, then the image 12 moves across the detection plane 13, in the drawing upwards or downwards. By measuring the position of the image 12 on the detection plane 13 one can determine the distance from the surface 14 to the device.

The two knife edges 17 and 18 which asymmetrically limit the light beam from the light source 1 and the light beam from the mirror 9, are each positioned in a plane in which the pupil of the microscope objective 7 forms an image. As a result of the presence of said knife edges 17 and 18, the pupil of the objective is divided in a transmit and a receive portion.

It will be clear that the mirror 9 does not form an essential part of the device. Through the presence of the mirror 9 the subbeams emanating from the mirror 6 are directed in parallel to the light beam from the light source 1 and this promotes a compact construction of the device.

The device of figure 2 in substance corresponds with the device of figure 1. The light from the light source 1, however, is linearly polarized. The light source 1 is a light source generating polarized light or it is a source emitting non-polarized light, which then passes a polarizing filter. After the polarized beam has passed the lenses 2, 3 and 4, the gap 5 and the asymmetric limitater 17, said beam impinges the polarized part mirror 15 which nearly totally passes the beam. After the beam has passed an element 16 which converts the linearly polarized light in circularly polarized light (being a 1/4 $\lambda$ plate), said beam reaches the objective 7 and is focussed in the point 8. The diffusedly reflected light, which usually is also polarized to some degree, reaches via the objective 7 and the element 16 again the polarizing part mirror 15 and, as its polarization direction is rotated over 90°, it is largely reflected to the mirror 9. Further the device of figure 2 completely corresponds with that of figure 1.

The advantage of the polarizing part mirror 15 with respect to the semi-transparent mirror 6 of figure 1 is that at the polarizing part mirror few losses occur especially if the objects 14 only have a small disturbing effect on the polarization of the beam. In the semi-transparent mirror 6, however, in each case of incidence, about 50 % of the incident beam is lost. The use of a light source of polarized light may, however, form an additional complication.

Figure 3 again shows an embodiment which in substance corresponds with that of figure 1.

The beam emanating from the mirror 9 passes the lens 10, the asymmetric limiter 18, the lens 11 and a filter 19, after which the image 12 formed by this beam impinges on an angular mirror 20. The corner rib of this angular mirror 20 is accurately positioned in the plane 13. Two photo detectors 21 and 22 are arranged asymmetrically with respect to the angular mirror. When the image 12 impinges on the angular mirror such that the rib divides this image in two then the detectors 21 and 22 each receive the same amount of light and they will each provide equal signals. If the image 12 shifts a little such that this image is not anymore split in two by the rib of the angular mirror 20 then the detectors 21 and 22 will receive different amounts of light and they will also provide output signals which differ. In this manner the location of the image 12 with respect to the angular mirror 20 and therefore also the distance from the surface 14, to be measured, with respect to the device can be determined in a precise manner. The detectors f.e. may be silicon detectors or photomultiplication tubes. The filter 19 can serve to attenuate disturbing light from the surrounding. To this end only a narrow wavelength band to pass the wavelength of the used light source 1 is determined by the filter 9.

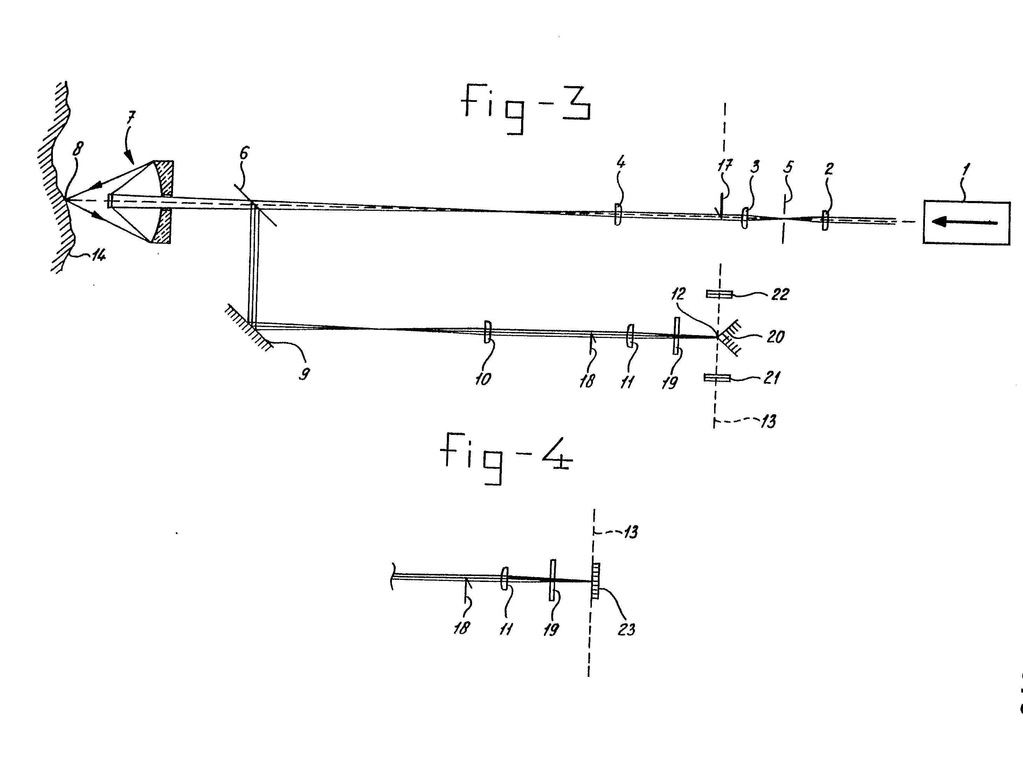

Figure 4 shows a portion of a device according to the invention, which device nearly corresponds with that of figure 3. Only that portion of the device which differs from the device of figure 3 is indicated in figure 4. Instead of using the angular mirror 20 and the detectors 21 and 22 now one single position sensitive detector is arranged in plane 13, f.e. a charge coupled series of silicon detectors known as a charge coupled device (CCD).

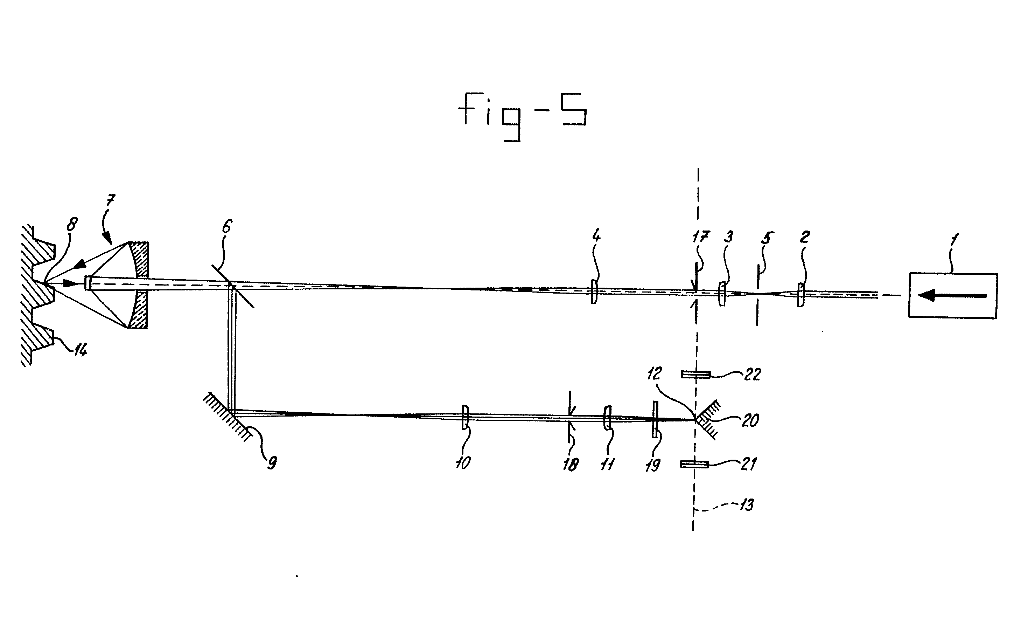

Figure 5 shows a device which nearly corresponds with that of figure 3. The object to be tested in this case is a toothed wheel. One can observe clearly in the drawing that at some parts of the surface to be measured, namely the sides of the teeth, the measuring beam only makes a small angle with the surface. In the device of figure 5 the limiters 17 and 18 are doubly implemented such that, at wish, the upper side and/or the lower side of the beams can be screened off. This screening therefore can be adapted to the positioning of the surface to be measured. For the purpose of measuring the tooth flank indicated in figure 5, the screen 17 can be positioned such that the surface 14 is only illuminated obliquely from above, while the screen 18 only passes light from the middle portion of the pupil to the detectors.

The device according to the invention measures the distance between a point of this device and a point of the surface to be measured. Usually, however, one is not so much interested in this distance as in the differences between the distances between a fixed point of the device and various points of the surface to be measured, i.e. a profile of the surface. By scanning and automatic recording of the measuring results such a profile can be measured with very fast and with high accuracy (better than one μm).

The starting point in above is that the distance between a point of the device and a point on the surface to be measured is determined by the location of the light spot 12 on the plane 13. It is, however, possible to shift also the surface to be measured with respect to the device until the image is again at the location where it was before the shift started, after which the distance across which the surface is shifted is measured f.e. with a micrometer.

## CLAIMS

1. A device to determine the distance from a point on the surface of an object to a fixed point, which device consists of a light source, and ▴ positioned behind each other in the path of the light beam emitted by the light source ▴ means to limit the section of this beam, a ray splitter and a microscope objective to focus the beam onto a point on the surface of the object to be measured, means to asymmetrically limit the section of the reflected beam and a position sensitive light detector being arranged behind each other in the path of the beam subsequently reflected by the surface of the object and the ray splitter, <u>characterized in</u> that the means to limit the beam emanating from the light source also realize an asymmetric limitation of said beam.

2. A device according to claim 1, <u>characterized in</u> that the light source is a source of linearly polarized light, that the ray splitter is a polarizing part mirror being inclined with respect to the path of the light beam from the light source and that between the polarizing part mirror and the microscope objective a 1/4 $\lambda$ plate is arranged.

3. A device according to one or a plurality of the preceeding claims, <u>characterized in</u> that each of the means to asymmetrically limit the said light beams is arranged at the location of an image of the pupil of the objective.

********

Fig-1

Fig-2

# Fig-3

# Fig-4

0162973

0162973

Fig-5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 109 545 (M.J. DOWNS) <br> * Figures 1-3; introduction; page 2, line 46 - page 4, line 73 * | 1-3 | G 01 B 11/24 <br> G 01 B 11/02 |
| X | DE-A-2 128 533 (VICKERS LTD.) <br> * Figure 1; page 4, paragraph 2 - page 10, paragraph 2 * | 1-3 | |
| X | IBM TECHNICAL DISCLOSURE BULLETIN, vol. 13, no. 8, January 1971, pages 2306-2307, New York, US; R.W. HARRISON: "Opto-electronic system for surface profilometry" <br> * Pages 2306-2307 * | 1,3 | |
| X,Y <br> D | FR-A-2 229 042 (O.N.E.R.A.) <br><br> * Introduction; figures 1-6; page 2, line 23 - page 4, line 23 * | 1,3 | **TECHNICAL FIELDS SEARCHED (Int. Cl.4)** <br><br> G 01 B 11/00 |
| X,Y | DE-A-2 416 708 (O.N.E.R.A.) <br> * Figures 1-18; whole document * | 1,3 | |

The present search report has been drawn up for all claims

| Place of search | Date of completion of the search | Examiner |
|---|---|---|
| THE HAGUE | 30-01-1985 | VISSER F.P.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document